# EUROPEAN PATENT APPLICATION

(11) **EP 2 058 561 A2**
(43) Date of publication of application: **13.05.2009**
(21) Application number: 08017676.1
(22) Date of filing: 08.10.2008
(51) Int. Cl.: F16H 59/04

(54) **Movable body position detecting device**

(30) Priority: 07.11.2007 JP 2007289553
(71) Applicant: Alps Electric Co., Ltd., Tokyo 145-8501 (JP)
(72) Inventor: Takigawa, Makito, Tokyo 145-8501 (JP)
(74) Representative: Klunker, Hans-Friedrich

(57) **Abstract**

Disclosed is a technique for detecting the failure of a device without depending on a computer.

A movable body position detecting device includes: a movable body (4) (shift lever) that has a cylindrical magnet (42) fixed thereto and is provided so as to be tiltable; first and second GMR sensors (71,72) that are provided so as to face a circumferential surface of the magnet and detects the inclination of the magnet in the orthogonal direction; a third GMR sensor (73) that is provided so as to face the circumferential surface of the magnet and has a detection surface which is not parallel to detection surfaces of the first and second GMR sensors; and a determining circuit (74,75) (an adding circuit and a comparing circuit) that determines whether at least one of the first to third GMR sensors is out of order on the basis of values detected by the first and second GMR sensors and a value detected by the third GMR sensor.

## Description

### BACKGROUND

### 1. Technical Field

The present invention relates to a movable body position detecting device, and more particularly, to a movable body position detecting device suitable to detect the position of a movable body, such as a shift lever for operating a transmission provided in a vehicle.

### 2. Related Art

A movable body position detecting device has been proposed which includes a magnet provided at the leading end of a shift lever that operates a transmission provided in a vehicle and a plurality of magnetic sensors that detect a magnetic field generated from the magnet, and determines the position of the shift lever on the basis of the intensity of the magnetic field generated from the magnet detected by the magnetic sensors (for example, see JP-A-2001-301483).

In the movable body position detecting device, in the initial state of the shift lever, all of the plurality of magnetic sensors detect the intensity of the magnetic field to be turned on. Therefore, in the initial state, when any one of the magnetic sensors is turned off, it is determined that the magnetic sensor is out of order, and a signal indicating that the magnetic sensor is out of order is output.

However, in the movable body position detecting device according to the related art, the plurality of magnetic sensors are connected to a computer, and the computer determines whether the magnetic sensors are out of order on the basis of electric signals corresponding to the intensity of the magnetic field detected by each of the magnetic sensors. Therefore, since the process of determining whether the magnetic sensors are out of order depends on the computer, the manufacturing costs of the device increase, and the compatibility thereof is lowered. Meanwhile, in recent years, there is a demand for a shift lever device capable of ensuring compatibility to a plurality of vehicles and detecting the failure of the device without depending on a computer.

### SUMMARY

According to an aspect of the invention, a movable body position detecting device includes: a movable body that has a cylindrical magnet fixed thereto and is provided so as to be tiltable; first and second GMR sensors that are provided so as to face a circumferential surface of the magnet and detects the inclination of the magnet in the orthogonal direction; a third GMR sensor that is provided so as to face the circumferential surface of the magnet and has a detection surface which is not parallel to detection surfaces of the first and second GMR sensors; and a determining circuit that determines whether at least one of the first to third GMR sensors is out of order on the basis of values detected by the first and second GMR sensors and a value detected by the third GMR sensor

According to the movable body position detecting device, the determining circuit determines whether at least one of the first to third GMR sensors is out of order on the basis of the values detected by the first and second GMR sensors and the value detected by the third GMR sensor. Therefore, it is possible to detect the failure of a device without depending on an expensive computer. In addition, since the determining circuit determines the failure of the GMR sensors without depending on a computer, it is possible to reduce the manufacturing costs of a device and ensure the compatibility of the device.

In the movable body position detecting device according the above-mentioned aspect, preferably, the determining circuit includes: an adding circuit that adds the values detected by the first and second GMR sensors; and a comparing circuit that compares a value obtained by multiplying the value obtained by the adding circuit by a predetermined coefficient with the value detected by the third GMR sensor. According to the above-mentioned structure, it is possible to detect the failure of the GMR sensors using simple circuits, such as the adding circuit and the comparing circuit.

In the movable body position detecting device according to the above-mentioned aspect, preferably, the third GMR sensor is arranged at the same angle with respect to the first and second GMR sensors. According to the above-mentioned structure, it is possible to simplify the process of the comparing circuit multiplying the voltage value obtained by the adding circuit by a coefficient.

In the movable body position detecting device according to the above-mentioned aspect, preferably, when the values are not equal to each other as the comparison result by the comparing circuit, the determining circuit determines that at least one of the first to third GMR sensors is out of order. According to the above-mentioned structure, the determining circuit can simply determine whether the GMR sensors are out of order on the basis of whether the values are equal to each other as the comparison result by the comparing circuit.

In the movable body position detecting device according to the above-mentioned aspect, preferably, the movable body is a shift lever that operates a transmission provided in a vehicle. According to the above-mentioned structure, it is possible to detect the failure of a device including the shift lever without depending on an expensive computer.

According to the above-mentioned aspect of the invention, the determining circuit can determine whether at least one of the first to third GMR sensors is out of order on the basis of the values detected by the first and second GMR sensors and the value detected by the third GMR sensor. Therefore, it is possible to detect the failure of a device without depending on an expensive computer.

### BRIEF DESCRIPTION OF THE DRAWINGS

Fig. 1 is a perspective view illustrating the appearance of a shift lever device to which a movable body position detecting device according to an embodiment of the invention is applied;
Fig. 2 is a perspective view illustrating the internal structure of the shift lever device according to the embodiment;
Fig. 3 is a perspective view illustrating the structure of a driver of the shift lever device according to the embodiment;
Fig. 4 is a perspective view illustrating an example in which the driver of the shift lever device according to the embodiment is tilted.
Fig. 5 is a perspective view illustrating the structure of a sensor unit of the shift lever device according to the embodiment;
Fig. 6 is a perspective view illustrating the relationship between the sensor unit and a magnet of the shift lever device according to the embodiment;
Fig. 7 is a top view illustrating the shift lever device shown in Fig. 6; and
Fig. 8 is a schematic diagram illustrating the inclination of the magnet of the shift lever device according to the embodiment.

### DESCRIPTION OF EXEMPLARY EMBODIMENTS

Hereinafter, an embodiment of the invention will be described in detail with reference to the accompanying drawings. In the following description, a movable body position detecting device according to an embodiment of the invention is applied to a shift lever device provided in, for example, a vehicle. However, the object to which the movable body position detecting device according to the embodiment is applied is not limited thereto, but the movable body position detecting device can be applied to various types of objects. For example, the movable body position detecting device can be applied to a control lever of a game machine.

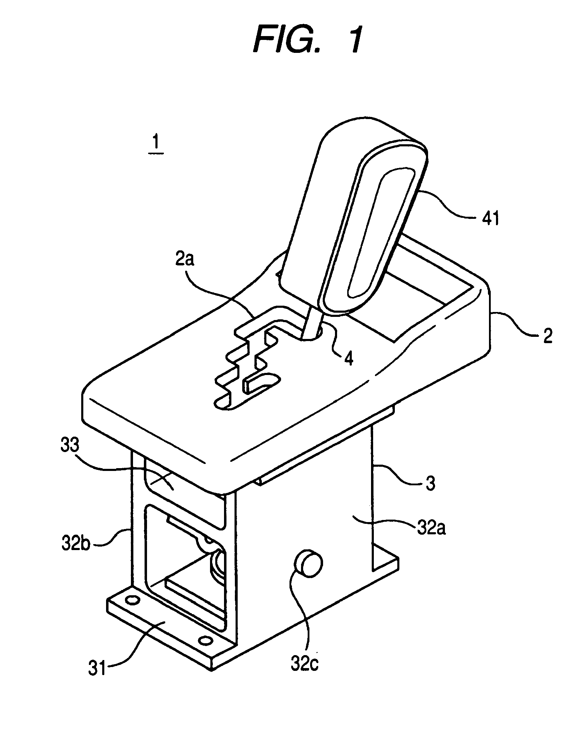

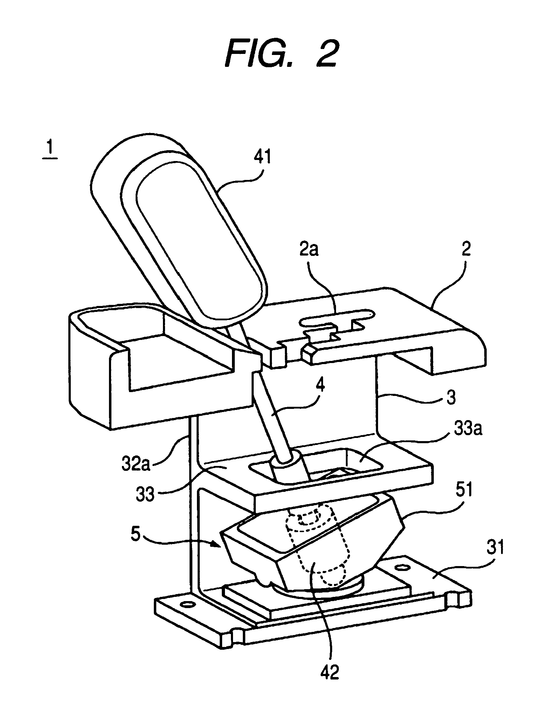

Fig. 1 is a perspective view illustrating the appearance of a shift lever device 1 to which the movable body position detecting device according to this embodiment of the invention is applied. Fig. 2 is a perspective view illustrating the internal structure of the shift lever device 1 according to this embodiment. Figs. 1 and 2 show the shift lever device 1 adopting a so-called tip shift mechanism, but the invention is not limited thereto. In Fig. 2, for convenience of description, only a portion of the internal structure of a driver, which will be described below, is shown.

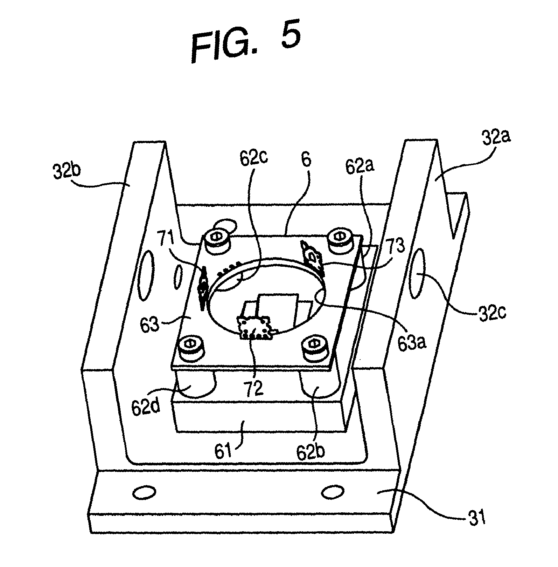

As shown in Figs. 1 and 2, the shift lever device 1 according to this embodiment includes a panel portion 2 that is provided in the vicinity of a driver's seat in the vehicle, a case 3 that is provided below the panel portion 2 and is fixed to, for example, of a frame of the vehicle, a shift lever 4 that has a tubular shape and extends upward from the inside of the case 3 through a slit 2a formed in the panel portion 2, a driver 5 that is provided at the lower end of the shift lever 4 and is tiltable to the inside of the case 3, and a sensor unit 6 that is mounted to the upper surface of the case 3 and is provided in the driver 5 (which is not shown in Figs. 1 and 2, but is shown in Fig. 5).

The panel portion 2 is formed of, for example, a resin material, and the slit 2a through which the shift lever 4 passes is formed in the vicinity of the center of the panel portion 2. The slit 2a has a stepwise shape so as to arrange the shift lever 4 in a predetermined shift range and to prevent the driver from unintentionally moving the shift lever 4. When the driver shifts gears through the slit 2a, the shift lever 4 is moved in the front-rear direction and the left-right direction of the vehicle.

The case 3 is formed of, for example, a metallic material, and includes a fixed surface 31, side surfaces 32a and 32b that extend upward from the fixed surface 31 in the vertical direction, and a connection surface 33 that is provided in the middle between the side surfaces 32a and 32b so as to connect the side surfaces 32a and 32b. The fixed surface 31 is fixed to a flat surface, such as a frame of the vehicle. The panel portion 2 is fixed to the upper ends of the side surfaces 32a and 32b. Circular holes 32c through which a shaft portion 51c of the driver 5, which will be described below, passes are formed at predetermined positions of the side surfaces 32a and 32b. A rectangular opening 33a is formed in the connection surface 33, and the shift lever 4 passes through the opening 33a (which is not shown in Fig. 1, but is shown in Fig. 2).

A shift knob 41 that is operated by, for example, the driver is provided at the upper end of the shift lever 4 that is arranged above the panel portion 2. In addition, a magnet 42 having a substantially cylindrical shape is fixed to the lower end of the shift lever that is arranged below the connection surface 33, and the driver 5 is provided so as to surround the magnet 42. The shift lever 4 is configured so as to be tiltable about the shaft portions 51c and 52a of the driver 5 in the front-rear direction and the left-right direction of the vehicle, which will be described below.

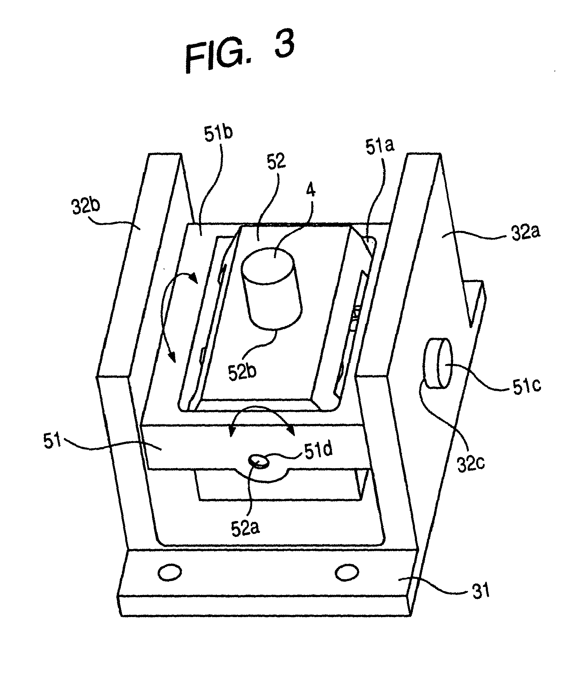

The driver 5 includes a first driving member 51 and a second driving member 52 that are formed of, for example, a resin material (the second driving member 52 is not shown in Fig. 2, but is shown in Fig. 3). The first driving member 51 and the second driving member 52 are connected to each other so as to be tiltable in the orthogonal direction, which will be described in detail below. The magnet 42 is provided in the driver 5 having the above-mentioned connection structure so as to be fixed to the lower end of the shift lever 4.

Next, the structure of the driver 5 of the shift lever device 1 according to this embodiment will be described with reference to Fig. 3. Fig. 3 is a perspective view illustrating the structure of the driver 5 of the shift lever device 1 according to this embodiment. Fig. 3 shows a portion below the connection surface 33 of the shift lever device 1 according to this embodiment. In the following description, the upper side of Fig. 3 is referred to as the front side of the vehicle, and the lower side of Fig. 3 is referred to as the rear side of the vehicle.

As shown in Fig. 3, the first driving member 51 includes a frame 51b having a rectangular opening 51a at its center, and the second driving member 52 is connected to the first driving member in the opening 51a. A pair of opposite surfaces of the frame 51b are arranged so as to face the inner walls of the side surfaces 32a and 32b of the case 3, and the shaft portions 51c that pass through the holes 32c formed in the side surfaces 32a and 32b are formed in the vicinities of the centers of the pair of surfaces of the frame 51b. The first driving member 51 is configured so as to be tiltable about the shaft portion 51c in the front-rear direction of the vehicle. In addition, circular holes 51d through which a shaft portion 52a of the second driving member 52, which will be described below, passes are formed in a pair of surfaces that are orthogonal to the side surfaces 32a and 32b in the frame 51b.

The second driving member 52 is opened downward and is provided in the opening 51a of the first driving member 51. Shaft portions 52a passing through the holes 51d of the first driving member 51 are formed in a pair of surfaces of the second driving member 52 that are orthogonal to the side surfaces 32a and 32b. The second driving member 52 is configured so as to be tiltable about the shaft portion 52a in the left-right direction of the vehicle. In addition, a hole 52b through which the shift lever 4 passes is formed at the center of the upper surface of the second driving member 52.

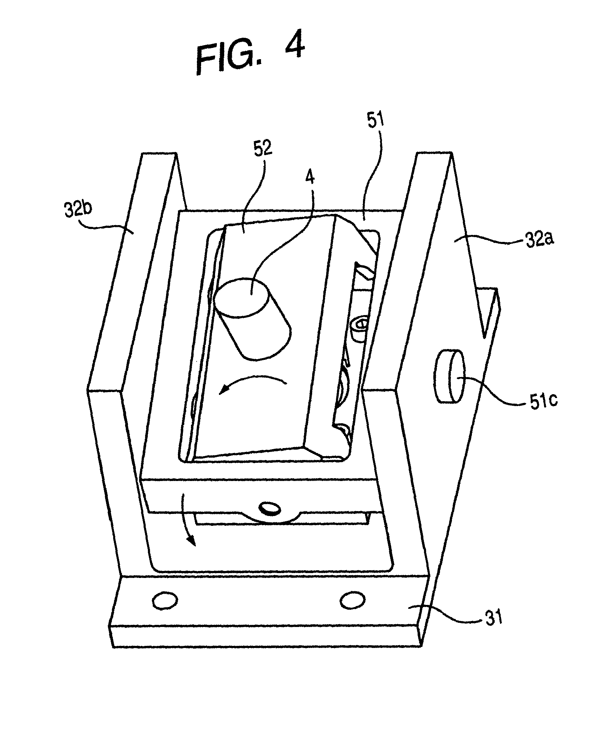

In this way, the second driving member 52 is connected to the first driving member 51, and the driver 5 is tiltable in the front-rear direction and the left-right direction of the vehicle when the shift lever 4 is operated. For example, when the shift lever 4 is operated to the left side on the rear side of the vehicle, as shown in Fig. 4, a portion of the first driving member 51 on the rear side of the vehicle (a lower portion in Fig. 4) is moved down and a portion of the second driving member 52 on the left side of the vehicle (a left portion in Fig. 4) is moved down.

The sensor unit 6 is provided below the driver 5 having the above-mentioned structure. Fig. 5 is a perspective view illustrating the structure of the sensor unit 6 of the shift lever device 1 according to this embodiment. As shown in Fig. 5, the sensor unit 6 is provided between the side surface 32a and the side surface 32b above the fixed surface 31. The sensor unit 6 includes a rectangular base 61 and a substrate 63 fixed to supporting columns 62a to 62d that are vertically provided at four corners of the base 61. The substrate 63 is fixed to the supporting columns 62a to 62d by screws from the upper side of the substrate.

A circular opening 63a is formed in the substrate 63. Three GMR sensors 71 to 73 are fixed to the substrate around the opening 63a. The GMR sensors 71 to 73 are fixed to the substrate 63 by inserting terminal portions provided at the lower ends of the GMR sensors into holes formed in the substrate 63 and soldering the terminal portions. The GMR sensor 71 detects the inclination of the magnet 42 in the front-rear direction of the vehicle when the shift lever 4 is operated, and the GMR sensor 72 detects the inclination of the magnet 42 in the left-right direction of the vehicle when the shift lever 4 is operated. The GMR sensor 73 detects the defect of the GMR sensors 71 and 72. The GMR sensors 71 to 73 are referred to as first to third GMR sensors, respectively.

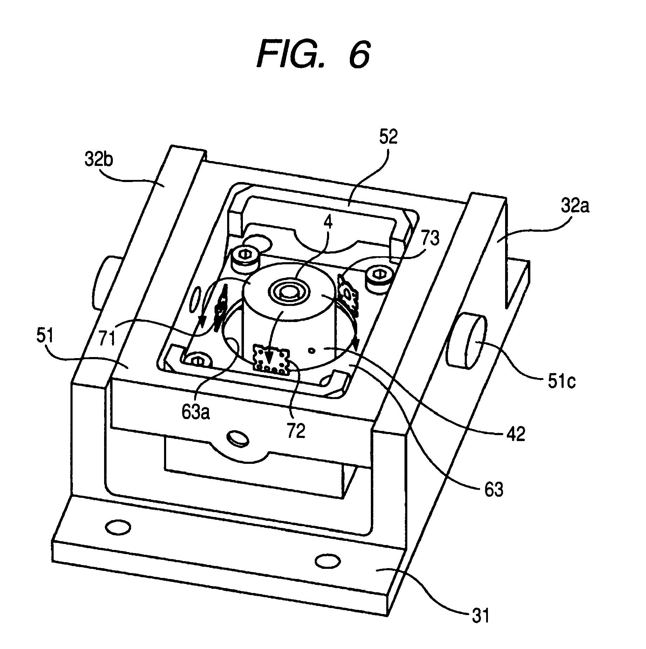

Fig. 6 is a perspective view illustrating the relationship between the sensor unit 6 and the magnet 42 in the shift lever device 1 according to this embodiment. Fig. 6 shows the cross section of the first driving member 51 in the vicinity of the upper end of the first driving member 51. As shown in Fig. 6, the magnet 42 fixed to the lower end of the shift lever 4 is arranged in the opening 63a of the substrate 63. The opening 63a of the substrate 63 has a diameter that is larger than that of the magnet 42 such that the magnet 42 can be inclined.

Next, the structure of the magnet 42 arranged in the opening 63a of the substrate 63 will be described. As described above, the magnet 42 has a cylindrical shape, and the shift lever 4 is fixed so as to pass through the center of the magnet 42. In the magnet 42, the upper part is magnetized to the N pole, and the lower part is magnetized to the S pole. Therefore, as represented by arrows in Fig. 6, magnetic flux is generated from the upper end to the lower end of the magnet 42.

The GMR sensors 71 to 73 are fixed to the substrate 63 with the detection surfaces thereof facing the circumferential surface of the magnet 42 having the above-mentioned structure. As described above, since the GMR sensors are fixed to the substrate 63 with the detection surfaces thereof facing the circumferential surface of the magnet 42, the magnetic flux generated from the magnet 42 passes through the detection surfaces of the GMR sensors 71 to 73 from the upper side to the lower side.

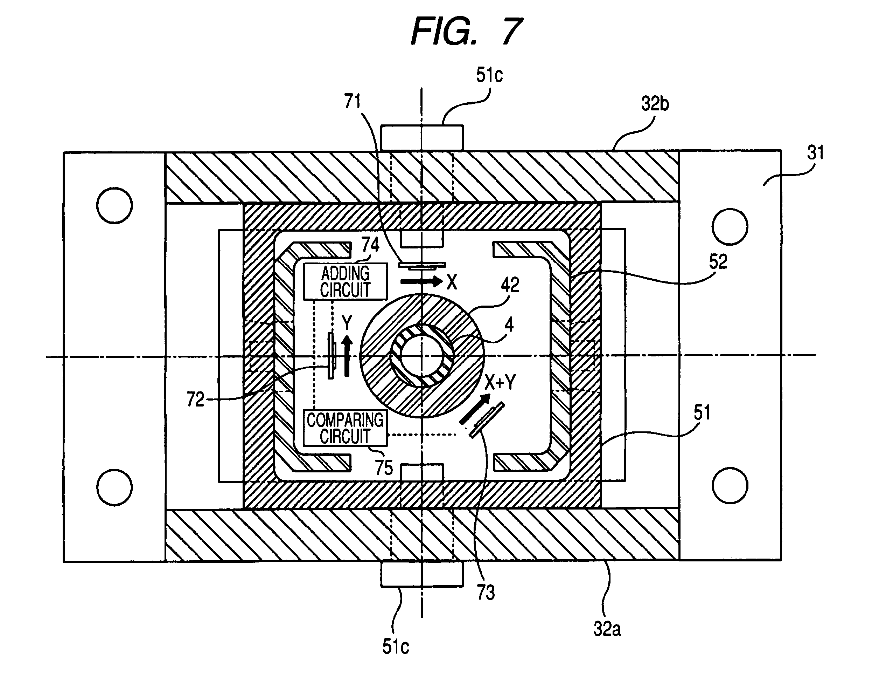

Next, the positions and functions of the GMR sensors 71 to 73 of the sensor unit 6 will be described. Fig. 7 is a top view illustrating the shift lever device 1 shown in Fig. 6. For convenience of description, in Fig. 7, the substrate 63 is omitted, and an adding circuit 74 and a comparing circuit 75 mounted on the substrate 63 are shown.

As shown in Fig. 7, the GMR sensors 71 and 72 are arranged at right angles with respect to the center of the axis of the shift lever 4 in an initial state (in which the shift lever 4 is not inclined), and detect the inclination of the magnet 42 (shift lever 4) in the orthogonal direction. Specifically, as shown in Fig. 7, the GMR sensor 71 detects the inclination of the magnet in the X direction, which is the front-rear direction of the vehicle, and the GMR sensor 72 detects the inclination of the magnet in the Y direction, which is the left-right direction of the vehicle. In addition, the GMR sensor 73 is arranged at the same angle (that is, 135°) with respect to the GMR sensors 71 and 72, and detects the sum of the inclination of the magnet 42 (shift lever 4) in the X direction and the inclination of the magnet 42 in the Y direction (hereinafter, referred to as the ' inclination of the magnet in the X+Y direction).

In the shift lever device 1 according to this embodiment, the magnetic flux generated from the magnet 42 fixed to the shift lever 4 acts on the GMR sensors 71 to 73. Then, the magnetic flux of the magnet 42 changes the electric resistance values of the GMR sensors 71 to 73, and the inclination of the magnet 42 is detected from the output signals (voltage signals) from the GMR sensors 71 to 73.

Next, the basic structure of the GMR sensors 71 to 73 that output signals in response to the magnetic flux from the magnet 42 will be described. Each of the GMR sensors includes a GMR (giant magnetoresistive) element that is formed by laminating an antiferromagnetic layer, a pinned layer, an intermediate layer, and a free layer on a substrate (which is different from the substrate 63) and shows a giant magnetoresistive effect.

In order to make the GMR elements of the GMR sensors 71 to 73 show the giant magnetoresistive (GMR) effect, for example, it is preferable that the antiferromagnetic layer be composed of a α-Fe₂O₃ layer, the pinned layer be composed of a NiFe layer, the intermediate layer be composed of a Cu layer, and the free layer be composed of a NiFe layer. However, the invention is not limited thereto, but any layers may be used as long as they can show the magnetoresistive effects. The GMR elements of the GMR sensors 71 to 73 may have any laminated structure as long as they can show the magnetoresistive effects.

As shown in Fig. 7, the adding circuit 74 and the comparing circuit 75 forming a determining circuit are mounted on the substrate 63. The adding circuit 74 adds the voltage value of the signal output from the GMR sensor 71 and the voltage value of the signal output from the GMR sensor 72. The comparing circuit 75 compares the voltage value added by the adding circuit 74 with the voltage value of the signal output from the GMR sensor 73.

In this case, the comparing circuit 75 compares a voltage value obtained by multiplying the voltage value added by the adding circuit 74 by a predetermined coefficient with the voltage value of the signal output from the GMR sensor 73. The coefficient used in the comparing circuit 75 varies depending on the position of the GMR sensor 73 relative to the GMR sensors 71 and 72. When the position of the GMR sensor 73 relative to the GMR sensors 71 and 72 is set as shown in Fig. 7, the coefficient is √2/2.

As the comparison result by the comparing circuit 75, if the voltage value added by the adding circuit 74 (actually, a value obtained by multiplying the voltage value by the coefficient) is not equal to the voltage value of the signal output from the GMR sensor 73, a signal indicating that at least one of the GMR sensors 71 to 73 is out of order (for example, an on signal) is output. On the other hand, if the voltage value added by the adding circuit 74 (actually, a value obtained by multiplying the voltage value by the coefficient) is equal to the voltage value of the signal output from the GMR sensor 73, a signal indicating that all the GMR sensors 71 to 73 are normally operated (for example, an off signal) is output.

As described above, as the comparison result by the comparing circuit 75, if the values are not equal to each other, it is determined that at least one of the GMR sensors 71 to 73 is out of order. Therefore, it is possible to simply determine whether the GMR sensors 71 to 73 are out of order on the basis of the comparison result by the comparing circuit 75. The control unit of the vehicle can determine the states (an abnormal state and a normal state) of the GMR sensors 71 to 73 on the basis of the output signals, and notify the states of the GMR sensors to the driver, for example.

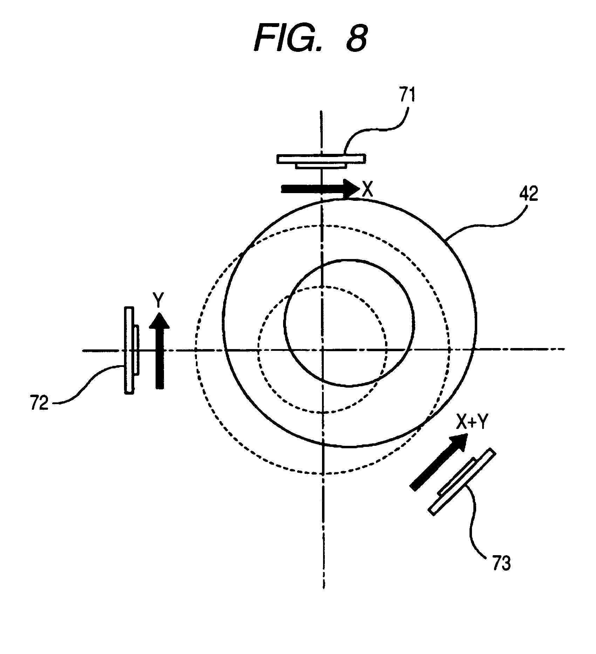

Next, an example of the comparison result by the comparing circuit 75 when the magnet 42 is inclined in response to the operation of the shift lever 4 in the shift lever device 1 according to this embodiment will be described. Fig. 8 is a diagram schematically illustrating the inclination of the magnet 42 in the shift lever device 1 according to this embodiment. Fig. 8 shows an example in which the magnet 42 is inclined from the initial state to the front right side of the vehicle at an angle of 45°.

In this embodiment, it is assumed that the magnet 42 is configured so as to be tiltable in the X direction and the Y direction in the range of ±30°, and Fig. 8 shows an example in which the magnet is inclined 5 degrees to the front and right sides of the vehicle. In addition, for example, it is assumed that, when the magnet 42 is inclined 30 degrees in the X direction, the GMR sensor 71 outputs a voltage value of +120 mV, and when the magnet 42 is inclined 5 degrees in the X direction, the GMR sensor 71 outputs a voltage value of +20 mV. Further, it is assumed that the GMR sensors 72 and 73 output the same voltage value as described above when the magnet 42 is inclined at the same angle as described above.

In Fig. 8, if the GMR sensors 71 to 73 are normally operated, the GMR sensor 71 outputs a voltage value of +20 mV, and the GMR sensor 72 outputs a voltage value of +20 mV. In addition, the GMR sensor 73 outputs a voltage value of about +28 mV since the inclination of the magnet 42 is larger than that in the X and Y directions ([√2/2] × 2). The voltage values output from the GMR sensors 71 and 72 are added by the adding circuit 74. In this way, the voltage value added by the adding circuit 74 is 40 mV.

The comparing circuit 75 multiples 40 mV, which is the voltage value obtained by the adding circuit 74, a predetermined coefficient to calculate a voltage value, and compares the calculated voltage value with the voltage value output from the GMR sensor 73. Specifically, the comparing circuit 75 compares a voltage value of about 28 mV obtained by multiplying 40 mV, which is the voltage value obtained by the adding circuit 74, by a coefficient of √2/2, which will be described below, with a voltage value of about 28 mV output from the GMR sensor 73. Since the two voltage values are equal to each other, the comparing circuit 75 outputs a signal indicating that all the GMR sensors 71 to 73 are normally operated.

On the other hand, as the comparison result by the comparing circuit 75, if the two voltage values are not equal to each other, the comparing circuit 75 outputs a signal indicating that any one of the GMR sensors 71 to 73 is out of order. For example, if the GMR sensor 71 is out of order and outputs a voltage value that is larger than or smaller than 20 mV, the comparing circuit 75 outputs the signal indicating that any one of the GMR sensors 71 to 73 is out of order since the two voltage values are not equal to each other as the comparison result by the comparing circuit 75.

As described above, the shift lever device 1 according to this embodiment includes the GMR sensors 71 and 72 that are arranged so as to face the circumferential surface of the magnet 42 fixed to the shift lever 4 and detect the inclination of the shift lever 4 in the orthogonal direction, and the GMR sensor 73 that is arranged so as to face the circumferential surface of the magnet 42 and has a detection surface that is not parallel to the detection surfaces of the GMR sensors 71 and 72. The determining circuit (the adding circuit 74 and the comparing circuit 75) determines whether at least one of the GMR sensors 71 to 73 is out of order on the basis of the values detected by the GMR sensors 71 and 72 and the value detected by the GMR sensor 73. Therefore, it is possible to detect the failure of the shift lever device 1 without depending on an expensive computer. In addition, since the determining circuit (the adding circuit 74 and the comparing circuit 75) determines the failure of the GMR sensors 71 to 73 without depending on a computer, it is possible to reduce the manufacturing costs of the shift lever device 1 and ensure the compatibility of the shift lever device.

Further, in the shift lever device 1 according to this embodiment, the determining circuit includes the adding circuit 74 that adds the values detected by the GMR sensors 71 and 72 and the comparing circuit 75 that compares a value obtained by multiplying the value obtained by the adding circuit 74 by a predetermined coefficient with the value detected by the GMR sensor 73. Therefore, it is possible to detect the failure of the GMR sensors 71 to 73 using simple circuits, such as the adding circuit 74 and the comparing circuit 75.

In particular, in the shift lever device 1 according to this embodiment, the GMR sensor 73 is arranged at the same angle with respect to the GMR sensors 71 and 72. It is possible to simplify the process of the comparing circuit 75 multiplying the voltage value obtained by the adding circuit 74 by a coefficient. For example, when the GMR sensor 73 is arranged at different angles with respect to the GMR sensors 71 and 72, it is necessary to multiply the voltage values detected by the GMR sensors 71 and 72 by different coefficients, which results in a complicated process.

The invention is not limited to the above-described embodiment, but various changes and modifications of the invention can be made without departing from the scope and spirit of the invention. In the above-described embodiment, the shapes and sizes of the components are not limited to those shown in the drawings, but the components may have various shapes and sizes within the scope of the invention. The invention can be appropriately modified and changed in various ways without departing from the scope of the object of the invention.

For example, in the above-described embodiment, the GMR sensor 73 is arranged at the same angle with respect to the GMR sensors 71 and 72, but the position of the GMR sensor 73 is not limited thereto. For example, the GMR sensor 73 may be arranged at any position as long as the detection surface thereof is not parallel to the detection surfaces of the GMR sensors 71 and 72. In this case, the comparing circuit 75 needs to appropriately change a coefficient to be multiplied, depending on the angles between the GMR sensor 73 and the GMR sensors 71 and 72.

## Claims

1. A movable body position detecting device (6) comprising:
a movable body (4) that has a cylindrical magnet (42) fixed thereto and is provided so as to be tiltable;
first and second GMR sensors (71, 72) that are provided so as to face a circumferential surface of the magnet (42) and detect the inclination of the magnet (42) in the orthogonal direction;
a third GMR sensor (73) that is provided so as to face the circumferential surface of the magnet (42) and has a detection surface which is not parallel to detection surfaces of the first and second GMR sensors (71, 72); and
a determining circuit (74, 75) that determines whether at least one of the first to third GMR sensors (71, 72, 73) is out of order on the basis of values detected by the first and second GMR sensors (71, 72) and a value detected by the third GMR sensor (73).

2. The movable body position detecting device (6) according to claim 1,
wherein the determining circuit (74, 75) includes:
an adding circuit (74) that adds the values detected by the first and second GMR sensors (71, 72); and
a comparing circuit (75) that compares a value obtained by multiplying the value obtained by the adding circuit (74) by a predetermined coefficient with the value detected by the third GMR sensor (73).

3. The movable body position detecting device according to claim 1 or 2
wherein the third GMR sensor (73) is arranged at the same angle with respect to the first and second GMR sensors (71, 72).

4. The movable body position detecting device according to claim 2 or 3,
wherein, when the values are not equal to each other as the comparison result by the comparing circuit (75), the determining circuit (74, 75) determines that at least one of the first to third GMR sensors (71, 72, 73) is out of order.

5. The movable body position detecting device according to any of claims 1 to 4,
wherein the movable body (4) is a shift lever that operates a transmission provided in a vehicle.
